# EUROPÄISCHE PATENTSCHRIFT

(11) **EP 3 373 407 B1**
(45) Veröffentlichungstag und Bekanntmachung des Hinweises auf die Patenterteilung: **12.02.2020**
(21) Anmeldenummer: 17160379.8
(22) Anmeldetag: 10.03.2017
(51) Int. Cl.: H02J 7/00

(54) **VERFAHREN ZUM BETREIBEN EINES MODULAREN BATTERIESPEICHERSYSTEMS, MODULARES BATTERIESPEICHERSYSTEM UND BATTERIEMANAGEMENTSYSTEM HIERFÜR**
METHOD FOR OPERATING A MODULAR BATTERY STORAGE SYSTEM, MODULAR BATTERY STORAGE SYSTEM AND BATTERY MANAGEMENT SYSTEM THEREFOR
PROCÉDÉ DE FONCTIONNEMENT D'UN SYSTÈME D'ACCUMULATEUR MODULAIRE, SYSTÈME D'ACCUMULATEUR MODULAIRE ET SYSTÈME DE GESTION DE BATTERIE ASSOCIÉ

(43) Veröffentlichungstag der Anmeldung: 12.09.2018
(73) Patentinhaber: VARTA Microbattery GmbH, 73479 Ellwangen Jagst (DE)
(72) Erfinder: Elmer, Martin, 73479 Ellwangen (DE); Hirnet, Alexander, 73447 Oberkochen (DE); Kloos, Dieter, 74579 Fichtenau (DE)
(74) Vertreter: Patentanwaltskanzlei Cartagena

(56) Entgegenhaltungen:
- US-A1- 2011 198 936
- LEON M TOLBERT ET AL: "Multilevel Converters for Large Electric Drives", IEEE TRANSACTIONS ON INDUSTRY APPLICATIONS, IEEE SERVICE CENTER, PISCATAWAY, NJ, US, Bd. 35, Nr. 1, 1. Februar 1999 (1999-02-01), XP011022532, ISSN: 0093-9994

## Beschreibung

Die Erfindung betrifft ein Verfahren zum Betreiben eines modularen Batteriespeichersystems sowie ein Batteriespeichersystem und ein Batteriemanagementsystem hierfür.

Ein modulares Batteriespeichersystem umfasst eine Gruppe aus *n* Energiespeichermodulen, wobei *n* mindestens 2 ist. Die Energiespeichermodule sind wiederaufladbar ausgebildet. Innerhalb eines Batteriespeichersystems sind die Energiespeichermodule in aller Regel durch parallele und/oder serielle Verschaltung miteinander verbunden. Bei den Energiespeichermodulen kann es sich um einzelne elektrochemische Zellen handeln oder aber auch um Verbünde aus zwei oder mehr solcher Zellen. Innerhalb eines solchen Verbunds können einzelne elektrochemische Zellen wiederum durch parallele und/oder serielle Verschaltung miteinander verbunden sein.

Bei einem Batteriespeichersystem handelt es sich bekanntlich um eine Gleichstromquelle. Mit Hilfe eines Multilevel-Umrichters können Batteriespeichersysteme aber auch an ein Wechselstromnetz angeschlossen werden. Bei solchen Umrichtern werden die Spannungen einzelner Energiespeichermodule zeitversetzt für unterschiedlich lange Zeiträume addiert. Wenn die Spannungen der einzelnen Energiespeichermodule im Verhältnis zur addierten Gesamtspannung ausreichend klein sind, lassen sich z.B. sinusförmige Spannungsverläufe in guter Näherung erzeugen.

Aus der US 2011/198936 A1 ist ein solcher Multilevel-Umrichter bekannt, der aus einzelnen Energiespeichermodulen einen Hochspannungs-Wechselstrom bereitstellt. Ein ähnlicher Umrichter wird in "Multilevel Converters for Large Electric Drives" (Leon M Tolbert et al., 1999) beschrieben. Dieser stellt aus mehreren Gleichstromquellen einen Wechselstrom für Hochleistungs- und/oder Hochspannungs-Elektromotoren bereit.

Bekanntlich werden für den sicheren Betrieb eines Batteriespeichersystems Information über die aktuelle Restkapazität (State-of-Charge, kurz: SOC) und die maximal verfügbare Kapazität (State-of-Health, kurz: SOH) der von dem Batteriespeichersystem umfassten Energiespeichermodule benötigt. Potentiell problematisch ist hierbei, dass SOC und SOH einzelner Energiespeichermodule in einem Batteriespeichersystem sehr stark divergieren können, beispielsweise in Folge von unterschiedlich schneller Alterung. In aller Regel bestimmen die Energiespeichermodule mit den schlechtesten Leistungswerten die Gesamtperformance eines Batteriespeichersystems.

Um eine optimale Funktion des Multilevel-Umrichters zu gewährleisten, sollte sichergestellt sein, dass alle mittels des Umrichters schaltbaren Energiespeichermodule möglichst wenig in ihren Leistungswerten differieren. Dies ist mit Hilfe sogenannter Balancing-Systeme, die einen Ladungs- und/oder Spannungsausgleich zwischen Energiespeichermodulen mit ungleichem Ladungs- und/oder Spannungszustand herbeiführen, möglich. Allerdings sind solche Balancing-Systeme nicht kostengünstig umzusetzen, da der damit verbundene Hard- und Softwareaufwand erheblich ist.

Der Erfindung lag die Aufgabe zugrunde, eine technische Lösung bereitzustellen, die es erlaubt, unter Vermeidung oder Verringerung der genannten Probleme Batteriespeichersysteme an ein Wechselstromnetz anzuschließen.

Zur Lösung dieser Aufgabe schlägt die Erfindung ein Verfahren mit den in Anspruch 1 genannten Merkmalen vor. Weiterbildungen des Verfahrens sind Gegenstand von Unteransprüchen.

Der Zweck eines erfindungsgemäßen Verfahrens liegt im Betreiben eines modularen Batteriespeichersystems, das eine Gruppe aus *n* wieder aufladbaren Energiespeichermodulen umfasst. Hierbei gilt, dass
- jedem einzelnen der *n* Energiespeichermodule ein Schalter zugeordnet ist, über den das jeweilige Energiespeichermodul aktiviert und deaktiviert werden kann, und
- die *n* Energiespeichermodule derart miteinander verschaltet sind, dass sich die Einzelspannungen *U_{Einzel}* aktivierter Energiespeichermodule zu einer Gesamtspannung *U_{Gesamt}* addieren können.

Mögliche Konfigurationen von Energiespeichermodulen modularer Batteriespeichersysteme sind eingangs beschrieben. Die beschriebenen Konfigurationen sind auch im Rahmen des erfindungsgemäßen Verfahrens bevorzugt.

Besonders bevorzugt umfassen erfindungsgemäß einsetzbare Energiespeichermodule elektrochemische Zellen, insbesondere auf Basis von Lithium-lonen-Technologie oder auf Basis von Nickel-Metallhydrid-Technologie. In besonderen Fällen (siehe unten) kann es aber auch zum Einsatz von Kondensatoren kommen.

Die von dem Batteriespeichersystem umfassten Energiespeichermodule können alle die gleichen Einzelspannungen *U_{Einzel}* aufweisen. Dies muss aber keineswegs immer so sein. Im Gegenteil, es kann sogar bevorzugt sein, Energiespeichermodule mit unterschiedlichen Einzelspannungen *U_{Einzel}* innerhalb des gleichen Systems zu verbauen. Dies erhöht nämlich die darstellbaren Varianten der Gesamtspannung *U_{Gesamt}.*

Die Schalter sind bevorzugt derart ausgebildet, dass die jeweils zugeordneten Energiespeichermodule auch mit umgekehrter Polarität aktiviert werden können. Auch hierdurch werden die darstellbaren Varianten der Gesamtspannung *U_{Gesamt}* erhöht, insbesondere wenn gleichzeitig Energiespeichermodule mit unterschiedlichen Einzelspannungen *U_{Einzel}* innerhalb des gleichen Systems verbaut werden. Die Einzelspannung *U_{Einzel}* eines in umgekehrter Polarität aktivierten Energiespeichermoduls leistet nämlich einen negativen Beitrag zur Gesamtspannung *U_{Gesamt}*.

Wenn eines der *n* Energiespeichermodule deaktiviert ist, so leistet es keinen Beitrag zu der Gesamtspannung *U_{Gesamt}.* In besonders bevorzugten Ausführungsformen sind die Schalter dazu ausgebildet, das jeweils zu ihnen gehörige Energiespeichermodul bei Bedarf überbrücken zu können. Überbrückte deaktivierte Energiespeichermodule sind nicht mehr elektrisch mit den weiteren Energiespeichermodulen der Gruppe verbunden.

Das erfindungsgemäße Verfahren umfasst die folgenden Schritte:
- Es wird für jedes der *n* Energiespeichermodule mindestens ein Leistungswert ermittelt.
- Es wird eine sich zeitlich ändernde Gesamtspannung *U_{Ges}(t)* erzeugt, indem mindestens zwei Energiespeichermodule aus der Gruppe zeitlich überlappend aber über unterschiedlich lange Aktivierungszeiträume aktiviert werden.
- In Abhängigkeit des ermittelten mindestens einen Leistungsparameters wird jedem der mindestens zwei Energiespeichermodule einer der unterschiedlich langen Aktivierungszeiträume zugeordnet.

Mit anderen Worten, in Abhängigkeit des mindestens einen Leistungsparameters wird also eine Zuordnung vorgenommen, welche der Energiespeichermodule nur für eine kurze Zeitdauer (einen kurzen Aktivierungszeitraum) und welche der Energiespeichermodule für eine längere Zeitdauer (einen längeren Aktivierungszeitraum) aktiviert werden.

Bei dem Leistungswert handelt es sich um einen Zustandswert, der charakteristisch für die Leistungsfähigkeit eines Energiespeichermoduls ist.

Erfindungsgemäß wird als Leistungswert ein aktueller SOH-Wert oder ein zu dem aktuellen SOH-Wert korrelierender Wert bestimmt. Zusätzlich kann als Leistungswert auch ein aktueller SOC-Wert oder ein zu dem aktuellen SOC-Wert korrelierender Wert bestimmt werden.

Zur Bestimmung des SOC existieren mehrere bekannte Vorgehensweisen. Beispielsweise kann bei Messung einer Entladespannung mit Hilfe bekannter Entladekurven auf den aktuellen SOC-Wert geschlossen werden. Im Rahmen der vorliegenden Erfindung ist die gewählte Methode zur SOC-Bestimmung jedoch sekundär. Wichtig ist lediglich, dass die ermittelten Leistungswerte miteinander vergleichbar sind, also auf vergleichbare Weise gewonnen werden, so dass anhand der Werte die Leistungsfähigkeit der Energiespeichermodule verglichen werden kann.

Auch zur Bestimmung des SOH existieren mehrere bekannte Vorgehensweisen. Charakteristisch für den SOH eines Energiespeichermoduls ist beispielsweise sein Innenwiderstand. Beispielsweise lässt sich bei Inbetriebnahme eines Energiespeichermoduls bei definierten Bedingungen (Temperatur, Ladezustand, Entladestrom, Entladedauer etc.) ein Referenzwert für den Innenwiderstand bestimmen. Anhand der Änderung des Innenwiderstands (gemessen unter den gleichen definierten Bedingungen) lässt sich auf den SOH schließen. Im Rahmen der vorliegenden Erfindung ist allerdings auch die gegebenenfalls gewählte Methode zur SOC-Bestimmung sekundär. Wichtig ist auch hier lediglich, dass die ermittelten Leistungswerte für die Energiespeichermodule des Energiespeichermoduls miteinander vergleichbar sind, also auf vergleichbare Weise gewonnen werden, so dass die Leistungsfähigkeit der Energiespeichermodule anhand der gewonnenen Werte untereinander verglichen werden kann.

In aller Regel ändert sich der SOH eines Energiespeichermoduls -abgesehen von Formierungszyklen bei Inbetriebnahme - zwischen unmittelbar aufeinanderfolgenden Lade- und Entladezyklen nicht signifikant. Wenn es sich bei dem mindestens einen Leistungswert um den aktuellen SOH handelt oder aber um einen Wert, der mit dem aktuellen SOH korreliert, so ist es daher in der Regel ausreichend, den Leistungswert nur in Intervallen, beispielsweise in Abständen von 10 Lade- und Entladezyklen, zu bestimmen. Der bestimmte Wert kann dann gespeichert werden und bis zu seiner Aktualisierung bei der Zuordnung der mindestens zwei Energiespeichermodule zu den unterschiedlich langen Aktivierungszeiträumen herangezogen werden.

Hingegen ist es in der Regel zweckmäßig, den aktuellen SOC oder aber um einen Wert, der mit dem aktuellen SOH korreliert, unmittelbar vor der Zuordnung zu bestimmen, da sich der SOC ja sehr kurzfristig in signifikantem Ausmaß ändern kann.

Die zeitlich sich ändernde Gesamtspannung *U_{Ges}(t)* kann mit grundsätzlich beliebigen Spannungsverläufen erzeugt werden. So lässt sich eine Sägezahnspannung in ebenso guter Näherung erzeugen wie eine Dreieckspannung.

Besonders bevorzugt handelt es sich bei *U_{Ges}(t)* insbesondere um eine Spannung mit sinusförmigem Spannungsverlauf, wie sie eingangs bereits Erwähnung fand. Das erfindungsgemäße Verfahren kann also in bevorzugten Ausführungsformen ein Entladeverfahren sein, bei dem Strom aus einer Gleichspannungsquelle unter Umwandlung von Gleichspannung in Wechselspannung in ein Wechselstromnetz eingespeist wird.

Ein modulares Batteriespeichersystem kann eine sehr große Anzahl an Energiespeichermodulen umfassen. In der Regel ist die Variable n ein Wert im Bereich von 2 bis 100000, bevorzugt im Bereich von 2 bis 10000, besonders bevorzugt 2 bis 1000. Innerhalb dieser Bereiche gilt weiter bevorzugt dass die Variable n ein Wert im Bereich von 5 bis 100, besonders bevorzugt von 5 bis 20, insbesondere von 7 bis 10, ist.

In bevorzugten Ausführungsformen weist das erfindungsgemäße Verfahren mindestens einen der folgenden zusätzlichen Schritte auf:
- In einem Datenspeicher werden die ermittelten Leistungswerte für jedes der *n* Energiespeichermodule abgelegt, so dass eine Sortierung der *n* Energiespeichermodule nach ihrer Leistungsfähigkeit möglich ist.
- Die Zuordnung der Energiespeichermodule zu den unterschiedlich langen Aktivierungszeiträumen erfolgt anhand der in dem Datenspeicher abgelegten Leistungswerte.
- Energiespeichermodulen mit vergleichsweise hoher Leistungsfähigkeit werden längere Aktivierungszeiträume zugeordnet als Energiespeichermodulen mit vergleichsweise geringer Leistungsfähigkeit.

In der Regel korrelieren die Aktivierungszeiträume zu den ermittelten Leistungsfähigkeiten der einzelnen Module. Wenn es sich beispielsweise bei dem mindestens einen Leistungswert um den aktuellen SOH handelt, so lassen sich die Energiespeichermodule nach steigendem SOH sortieren. Der größte SOH-Wert kennzeichnet dann die größte Leistungsfähigkeit, der kleinste SOH-Wert die geringste Leistungsfähigkeit. Erfindungsgemäß ist es bevorzugt, dass dem Energiespeichermodul mit dem größten SOH der längste Aktivierungszeitraum zugeordnet wird, dem Energiespeichermodul mit dem kleinsten SOH hingegen der kürzeste Aktivierungszeitraum.

Dies hat zur Konsequenz, dass leistungsfähigere Energiespeichermodule im Betrieb stärker belastet werden als weniger leistungsfähige. Durch die unterschiedlichen Belastungen werden die Leistungsfähigkeiten der Energiespeichermodule langfristig wieder aneinander angeglichen, da stärker belastete Module im Mittel schneller altern als schwächer belastete. Das erfindungsgemäße Verfahren sorgt damit indirekt für eine Symmetrisierung der Energiespeichermodule und hat damit einen ähnlichen Effekt wie die eingangs erwähnten Balancing-Systeme.

Die größte Kapazitätsvarianz weisen gealterte Energiespeichermodule aus der Elektromobilität auf. Auch solche gealterten Energiespeichermodule können gemäß dem vorliegend beschriebenen Verfahren problemlos gemeinsam in einem Batteriespeichersystem betrieben werden, ohne dass sie vorselektiert werden müssten. Wenn ein Energiespeichermodul sein Lebensende erreicht hat, so kann es durch ein Ersatzmodul ohne weiteres ersetzt werden, ohne dass es dabei einer aufwändigen vorbereitender Maßnahmen (Matching usw.) bedarf. Auch neuwertige Energiespeichermodule können ungeachtet ihrer Initialkapazität und einer eventuellen Produktionsstreuung ohne vorbereitende Maßnahmen verschaltet und betrieben werden.

Insgesamt verlängert sich die Nutzungsdauer der in einem erfindungsgemäß betriebenen Batteriespeichersystem eingesetzten Energiespeichermodule, was sowohl einen ökologischen als auch ökonomischem Vorteil mit sich bringt.

In besonders bevorzugten Ausführungsformen weist das erfindungsgemäße Verfahren mindestens einen der folgenden zusätzlichen Schritte auf:
- Es wird ermittelt, welche Anzahl *m* an Energiespeichermodulen zur Erzeugung einer Scheitelspannung von *U_{Ges}(t)* benötigt wird.
- Die m Energiespeichermodule werden aus den zur Verfügung stehenden *n* Energiespeichermodulen ausgewählt.
- Um einen gewünschten Spannungsverlauf von *U_{Ges}(t)* zu erzeugen, wird festgelegt, in welchen zeitlichen Abständen und über welchen Aktivierungszeitraum die *m* Energiespeichermodule zu aktivieren sind.
- Die ausgewählten *m* Energiespeichermodule werden unter Berücksichtigung der Sortierkriterien "Leistungsfähigkeit" und "Länge der ihnen zugeordneten Aktivierungszeiträume" in eine Reihenfolge überführt, in der die beiden Sortierkriterien in gleicher Richtung entweder beide ansteigen oder beide abfallen.
   Die *m* Energiespeichermodule sind nach ihrer Leistungsfähigkeit sortierbar, die Aktivierungszeiträume nach ihrer Länge. Die Aktivierungszeiträume werden den *m* Energiespeichermodulen zugeordnet. Die Zuordnung erfolgt dabei derart, dass nach der Zuordnung eine Sortierung der Energiespeichermodule nach ihrer Leistungsfähigkeit und nach der Länge der ihnen zugeordneten Aktivierungszeiträume zum gleichen Ergebnis führt. Bei einer Sortierung nach steigender Leistungsfähigkeit ergibt sich also eine Reihenfolge, in der dem leistungsfähigsten Modul der längste Aktivierungszeitraum zugeordnet ist, dem zweitleistungsfähigsten der zweitlängste Aktivierungszeitraum, dem drittleistungsfähigsten der drittlängste Aktivierungszeitraum etc..
- Die *m* Energiespeichermodule werden in dieser Reihenfolge und in den festgelegten zeitlichen Abständen aktiviert.

Bei der Scheitelspannung handelt es sich um den größten Betrag des Augenblickswerts einer sich periodisch ändernden Spannung. Bei sinusförmigem Spannungsverlauf entspricht die Scheitelspannung der Amplitude der Sinusschwingung.

Die Ermittlung von *m* erfolgt im einfachsten Fall (wenn alle Energiespeichermodule des modularen Batteriespeichersystems die gleiche Einzelspannung U_{Einzel} aufweisen), indem der Wert der Scheitelspannung durch den Wert der Einzelspannung U_{Einzel}, die ein einzelnes Energiespeichermodul liefert, dividiert wird.

In besonders bevorzugten Ausführungsformen umfasst das modulare Batteriespeichersystem mehr Energiespeichermodule als zur Erzeugung der Scheitelspannung benötigt werden. In Kurzfassung, es gilt bevorzugt *n* > *m.* Die Auswahl der *m* Energiespeichermodule kann beispielsweise anhand der verfügbaren Daten zur Leistungsfähigkeit der Module erfolgen. Es können beispielsweise immer die *m* leitungsfähigsten Module ausgewählt werden.

Mit besonderem Vorteil kann es auch vorgesehen sein, dass defekte Energiespeichermodule bei der Auswahl nicht berücksichtigt werden. Hierzu kann beispielsweise für jedes der *n* Energiespeichermodule ein Leistungsschwellwert definiert werden, bei dessen Unterschreiten ein Energiespeichermodul deaktiviert wird.

Gegebenenfalls kann vorgesehen sein, dass die Deaktivierung in Folge des Unterschreitens ein Signal oder eine Mitteilung auslöst, das auf die Deaktivierung und/oder auf die Notwendigkeit eines Austauschs hinweist. Das defekte Energiespeichermodul kann grundsätzlich im laufenden Betrieb getauscht werden. Das erfindungsgemäße Verfahren muss hierfür nicht gestoppt werden. Zu diesem Zweck weisen die den Energiespeichermodulen zugeordneten Schalter die oben erwähnte Möglichkeit zur Überbrückung auf, bei der die Energiespeichermodule nicht mehr elektrisch mit weiteren Energiespeichermodulen verbunden sind.

In weiteren besonders bevorzugten Ausführungsformen weist das erfindungsgemäße Verfahren mindestens eines der folgenden zusätzlichen Merkmale und/oder einen der folgenden zusätzlichen Schritte auf:
- Der gewünschte Spannungsverlauf ist sinusförmig.
- Das Energiespeichermodul mit der höchsten Leistungsfähigkeit wird zuerst aktiviert und das mit der geringsten Leistungsfähigkeit zuletzt.
- Das Energiespeichermodul mit der höchsten Leistungsfähigkeit wird über den längsten Aktivierungszeitraum aktiviert und das Energiespeichermodul mit der geringsten Leistungs-fähigkeit über den kürzesten Aktivierungszeitraum.

Zur Erzeugung einer Sinus-Halbwelle muss das Energiespeichermodul, dem der längste Aktivierungszeitraum zugeordnet wurde, als erstes aktiviert und als letztes deaktiviert werden. Hingegen muss das Energiespeichermodul, dem der kürzeste Aktivierungszeitraum zugeordnet wurde, als letztes aktiviert und als erstes deaktiviert werden. Erfindungsgemäß weist das Energiespeichermodul, dem der längste Aktivierungszeitraum zugeordnet wurde, eine vergleichsweise hohe Leistungsfähigkeit auf. Das Energiespeichermodul, dem der kürzeste Aktivierungszeitraum zugeordnet wurde, kann hingegen eine vergleichsweise niedrige Leistungsfähigkeit aufweisen.

In weiteren besonders bevorzugten Ausführungsformen weist das erfindungsgemäße Verfahren mindestens eines derfolgenden zusätzlichen Merkmale auf:
- Die Gruppe aus den *n* Energiespeichermodulen umfasst ausschließlich Energiespeichermodule vom Lithium-lonen-Typ.
- Die Gruppe aus den *n* Energiespeichermodulen umfasst ausschließlich Energiespeichermodule vom Typ Nickel-Metallhydrid.
- Die Gruppe aus den *n* Energiespeichermodulen umfasst verschiedene Typen von Energiespeichermodulen.
- Die Gruppe aus den *n* Energiespeichermodulen umfasst mindestens ein Energiespeichermodul mit einer Kathode auf Basis von LFP (Lithium-Eisenphosphat).
- Die Gruppe aus den *n* Energiespeichermodulen umfasst mindestens ein Energiespeichermodul mit einer Kathode auf Basis von NMC (Lithium-Nickel-Mangan-Kobalt-Oxid).
- Die Gruppe aus den *n* Energiespeichermodulen umfasst mindestens ein Energiespeichermodul mit einer Kathode auf Basis von LTO (Lithium-Titanat).
- Die Gruppe aus den *n* Energiespeichermodulen umfasst mindestens ein Energiespeichermodul mit einer Kathode auf Basis von NCA (Lithium-Nickel-Kobalt-Aluminium-Oxid).
- Die Gruppe aus den *n* Energiespeichermodulen umfasst mindestens ein Energiespeichermodul vom Typ Pb /PbO₂.

Gemäß dem beschriebenen Verfahren können ohne weiteres auch Energiespeichermodule unterschiedlichen Typs in einem Batteriespeichersystem miteinander verschaltet werden. Hierbei können die Stärken einzelner Typen gezielt genutzt werden. Unterschiedliche Energiespeichermodule können je nach Anforderung angesteuert werden. Beispielsweise eignen sich Energiespeichermodule mit einer Kathode auf Basis von LTO zum Auffangen hoher Lastspitzen.

Grundsätzlich ist es gemäß dem beschriebenen Verfahren sogar möglich, Energiespeichermodule vom Typ Nickel-Metallhydrid und Energiespeichermodule vom Lithium-Ionen-Typ in einem Batteriespeichersystem miteinander zu verschalten.

Energiespeichermodule vom Typ Pb/PbO₂ finden mit einem Schwefelsäure-Elektrolyten klassisch als Einzelzellen eines Bleiakkumulators Verwendung. Im Rahmen der vorliegenden Erfindung kann es besonders bevorzugt sein, das mindestens eine Energiespeichermodul vom Typ Pb /PbO₂ mit Energiespeichermodulen vom Lithium-Ionen-Typ in einem Batteriespeichersystem miteinander zu verschalten. Energiespeichermodule vom Typ Pb/PbO₂ eignen sich besonders gut zur Verwendung in Scheitelspitzen.

In weiteren besonders bevorzugten Ausführungsformen weist das erfindungsgemäße Verfahren mindestens eines der folgenden zusätzlichen Merkmale und/oder einen der folgenden zusätzlichen Schritte auf:
- Mindestens einer der den *n* Energiespeichermodulen zugeordneten Schalter ist dazu ausgebildet, eine Pulswellenmodulation (PWM) erzeugen zu können.
- Bei dem Energiespeichermodul, dem dieser Schalter zugeordnet ist, handelt es sich um einen Kondensator oder um eine Zelle vom Lithium-Ionen-Typ.
- Beim Aktivieren und/oder Deaktivieren von Energiespeichermodulen wird mittels des zur PWM-Erzeugung ausgebildeten Schalters eine PWM erzeugt, um den Übergang zwischen einzelnen Spannungsstufen abzufedern.

Für Batteriespeichersysteme in dieser Ausführungsform ist eine elektromagnetische Verträglichkeit (EMV) einfacher zu realisieren.

Erfindungsgemäß können zwei oder mehr der den *n* Energiespeichermodulen zugeordneten Schalter dazu ausgebildet sein, eine Pulswellenmodulation (PWM) erzeugen zu können. Zur Realisierung der beschriebenen Ausführungsform benötigt es aber grundsätzlich lediglich eines zur PWM-Erzeugung ausgebildeten Schalters. Dies ist insoweit vorteilhaft, als alle weiteren Schalter langsamer und kostengünstiger ausgelegt sein können. Es ist dann möglich, den zur PWM-Erzeugung ausgebildeten Schalter über ein vergleichsweise schnelles Bussystem separat anzusteuern während zur Ansteuerung der übrigen Schalter ein vergleichsweise langsames, gemeinsames Bussystem genutzt wird. Die Ansteuerung und der Aufbau des Batteriespeichersystems können somit sehr einfach gehalten werden.

Von der Erfindung sind auch ein Batteriemanagementsystem mit den Merkmalen des Anspruchs 8 und ein modulares Batteriespeichersystem mit den Merkmalen des Anspruchs 12 umfasst. Weiterbildungen des Batteriemanagementsystems und des Batteriespeichersystems sind Gegenstand von Unteransprüchen.

Das erfindungsgemäße Batteriemanagementsystem ist für ein modulares Batteriespeichersystem vorgesehen, das eine Gruppe aus *n* wieder aufladbaren Energiespeichermodulen umfasst. Besonders bevorzugt ist es Teil eines Batteriespeichersystems, wie es im Rahmen der obigen Erläuterung des erfindungsgemäßen Verfahrens beschrieben wird. Das Batteriemanagementsystem zeichnet sich durch die folgenden Merkmale aus:
- Das Batteriemanagementsystem umfasst für jedes einzelne der *n* Energiespeichermodule einen Schalter, über den das jeweilige Energiespeichermodul aktiviert und deaktiviert werden kann.
- Die Schalter sind derart ausgebildet und miteinander verbunden, dass sich die Einzelspannungen *U_{Einzel}* aktivierter Energiespeichermodule zu einer Gesamtspannung *U_{Gesamt}* addieren können.
- Das Batteriemanagementsystem umfasst eine Prüfeinrichtung, mittels der sich für jedes der *n* Energiespeichermodule mindestens ein Leistungswert ermitteln lässt, der charakteristisch für seine Leistungsfähigkeit ist. Erfindungsgemäß ist die Prüfeinrichtung dazu ausgebildet, als Leistungswert einen SOH-Wert der Energiespeichermodule zu ermitteln.
- Das Batteriemanagementsystem umfasst eine Steuereinrichtung, mittels der sich mindestens zwei der Energiespeichermodule aus der Gruppe aus den *n* wieder aufladbaren Energiespeichermodulen über die jeweils zugeordneten Schalter zeitlich überlappend aber über unterschiedlich lange Aktivierungszeiträume aktivieren lassen, um eine sich zeitlich ändernde Gesamtspannung *U_{Ges}(t)* zu erzeugen.
- Die Steuereinrichtung ist dazu ausgebildet, jedem der mindestens zwei Energiespeichermodule in Abhängigkeit des ermittelten mindestens einen Leistungswerts einer der unterschiedlich langen Aktivierungszeiträume zuzuordnen.

In Übereinstimmung mit den obigen Ausführungen zum erfindungsgemäßen Verfahren weist das erfindungsgemäße Batteriemanagementsystem bevorzugt mindestens eines der folgenden zusätzlichen Merkmale auf:
- Es umfasst einen Datenspeicher, in dem die ermittelten Leistungswerte für jedes der *n* Energiespeichermodule abgelegt werden können, so dass eine Sortierung der *n* Energiespeichermodule nach ihrer Leistungsfähigkeit möglich ist.
- Die Steuereinrichtung ist dazu ausgebildet, die Zuordnung der Energiespeichermodule zu den unterschiedlich langen Aktivierungszeiträumen anhand der in dem Datenspeicher abgelegten Leistungswerte vorzunehmen.

Ebenfalls in Übereinstimmung mit den obigen Ausführungen zum erfindungsgemäßen Verfahren weist das erfindungsgemäße Batteriemanagementsystem besonders bevorzugt mindestens eines der folgenden zusätzlichen Merkmale auf:
- Die Steuereinrichtung ist dazu ausgebildet, automatisiert zu ermitteln, welche Anzahl *m* an Energiespeichermodulen zur Erzeugung einer Scheitelspannung von *U_{Ges}(t)* benötigt wird.
- Die Steuereinrichtung ist dazu ausgebildet, automatisiert die *m* Energiespeichermodule aus den zur Verfügung stehenden *n* Energiespeichermodulen auszuwählen.
- Das Batteriemanagementsystem umfasst einen Datenspeicher, in dem abgelegt werden kann, in welchen zeitlichen Abständen und über welchen Aktivierungszeitraum die *m* Energiespeichermodule zu aktivieren sind.
- Die Steuereinrichtung ist dazu ausgebildet, automatisiert die ausgewählten *m* Energiespeichermodule unter Berücksichtigung der Sortierkriterien "Leistungsfähigkeit" und "Länge der ihnen zugeordneten Aktivierungszeiträume" in eine Reihenfolge zu überführen, in der die beiden Sortierkriterien in gleicher Richtung entweder beide ansteigen oder beide abfallen.
- Die Steuereinrichtung ist dazu ausgebildet, die *m* Energiespeichermodule in dieser Reihenfolge und in den festgelegten zeitlichen Abständen zu aktivieren.

Besonders bevorzugt zeichnet sich das Batteriemanagementsystem zusätzlich durch mindestens eines der folgenden Merkmale aus:
- Mindestens einer der den *n* Energiespeichermodulen zugeordneten Schalter ist dazu ausgebildet, eine Pulswellenmodulation (PWM) erzeugen zu können.
- Die Steuereinrichtung ist dazu ausgebildet, beim Aktivieren und/oder Deaktivieren von Energiespeichermodulen mittels des zur PWM-Erzeugung ausgebildeten Schalters eine PWM zu erzeugen, um den Übergang zwischen einzelnen Spannungsstufen abzufedern.

Weitere mögliche bevorzugte Ausführungsformen des Batteriemanagementsystems lassen sich den obigen Ausführungen zum erfindungsgemäßen Verfahren entnehmen.

Das erfindungsgemäße modulare Batteriespeichersystem umfasst stets die folgenden Komponenten:
- Eine Gruppe aus *n* wieder aufladbaren Energiespeichermodulen.
- Ein Batteriemanagementsystem.

Bei den Energiespeichermodulen handelt es sich bevorzugt um solche, die bereits im Zusammenhang mit dem erfindungsgemäßen Verfahren beschrieben wurden. Bei dem Batteriemanagementsystem handelt es sich um das unmittelbar zuvor beschriebene System.
- Das Batteriespeichersystem ist bevorzugt dazu ausgebildet, gemäß dem oben beschriebenen erfindungsgemäßen Verfahren betrieben zu werden.
- Besonders bevorzugt weist das erfindungsgemäße Batteriespeichersystem mindestens eines der folgenden zusätzlichen Merkmale auf:
- Die Gruppe aus den *n* Energiespeichermodulen umfasst ausschließlich Energiespeichermodule vom Lithium-Ionen-Typ.
- Die Gruppe aus den *n* Energiespeichermodulen umfasst ausschließlich Energiespeichermodule vom Typ Nickel-Metallhydrid.
- Die Gruppe aus den *n* Energiespeichermodulen umfasst verschiedene Typen von Energiespeichermodulen.
- Die Gruppe aus den *n* Energiespeichermodulen umfasst mindestens ein Energiespeichermodul mit einer Kathode auf Basis von LFP (Lithium-Eisenphosphat).
- Die Gruppe aus den *n* Energiespeichermodulen umfasst mindestens ein Energiespeichermodul mit einer Kathode auf Basis von NMC (Lithium-Nickel-Mangan-Kobalt-Oxid).
- Die Gruppe aus den *n* Energiespeichermodulen umfasst mindestens ein Energiespeichermodul mit einer Kathode auf Basis von LTO (Lithium-Titanat).
- Die Gruppe aus den *n* Energiespeichermodulen umfasst mindestens ein Energiespeichermodul mit einer Kathode auf Basis von NCA (Lithium-Nickel-Kobalt-Aluminium-Oxid).
- Die Gruppe aus den *n* Energiespeichermodulen umfasst mindestens ein Energiespeichermodul vom Typ Pb /PbO₂.

Weitere mögliche bevorzugte Ausführungsformen des Batteriespeichersystems lassen sich den obigen Ausführungen zum erfindungsgemäßen Verfahren und zum erfindungsgemäßen Batteriemanagementsystem entnehmen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigen:
- Figur 1: zur Veranschaulichung eine Schaltungskonfiguration umfassend n jeweils mit einem Schalter verbundene Energiespeichermodule (schematische Darstellung);
- Figur 2: eine durch überlappende Aktivierung von gemäß Fig. 1 verschalteten Energiespeichermodulen erzeugte sinusförmige Halbwelle (schematische Darstellung);
- Figur 3: den Einsatz einer Pulsweitenmodulation in Zusammenhang mit der Erfindung.

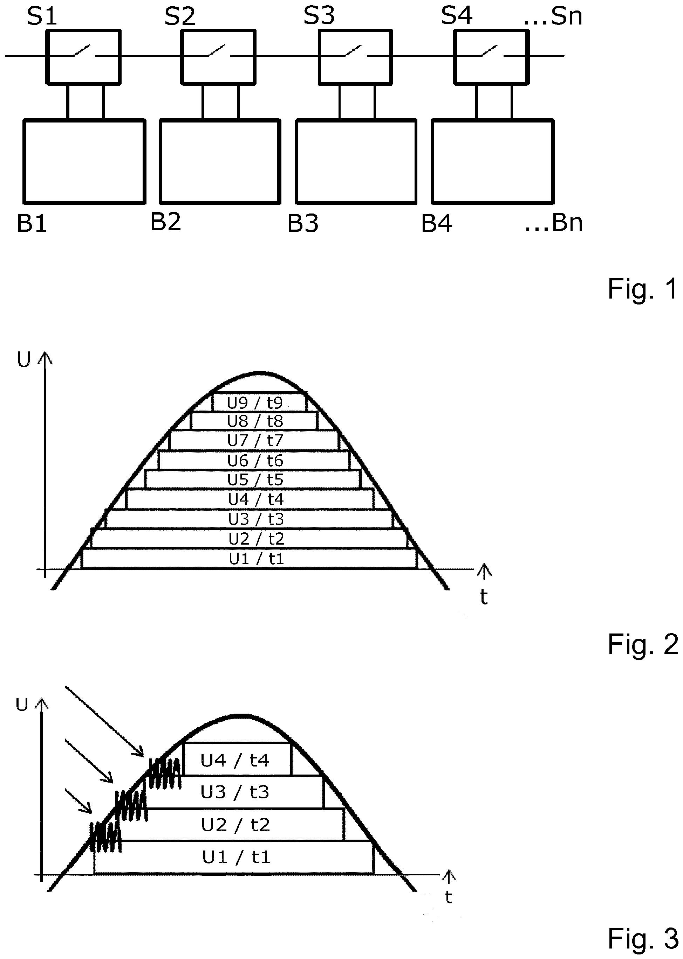

Figur 1 zeigt ein vereinfachtes Beispiel eines Batteriespeichersystems gemäß der Erfindung umfassend *n* wieder aufladbare Energiespeichermodule B1 bis Bₙ und *n* Schalter S1 bis Sₙ. Jeder der Schalter ist genau einem der Energiespeichermodule zugeordnet und umgekehrt (S1 zu B1, S2 zu B2, S3 zu B3, S4 zu B4 und Sₙ zu Bₙ). Mittels der Schalter können die jeweiligen Energiespeichermodule aktiviert und deaktiviert werden. Jeder der Schalter kann mehrere Schaltstellungen aufweisen. In einer ersten Schaltstellung ist das dem Schalter zugeordnete Energiespeichermodul aktiviert und seine Einzelspannung *U_{Einzel}* steht zur Verfügung. In einer zweiten Schaltstellung ist das dem Schalter zugeordnete Energiespeichermodul deaktiviert und seine Einzelspannung *U_{Einzel}* steht nicht zur Verfügung. In einer dritten Schaltstellung ist das dem Schalter zugeordnete Energiespeichermodul mit umgekehrter Polarität aktiviert. Alle Schalter sind dazu ausgebildet, die jeweils zu ihnen gehörigen Energiespeichermodule im Deaktivierungsfall (in der zweiten Schaltstellung) überbrücken zu können. Deaktivierte Energiespeichermodule können somit im laufenden Betrieb ausgetauscht werden.

Die Schalter sind ihrerseits in Serie geschaltet. Über die Schalter können die *n* Energiespeichermodule derart miteinander verschaltet werden, dass sich die Einzelspannungen *U_{Einzel}* aktivierter Energiespeichermodule zu einer Gesamtspannung *U_{Gesamt}* addieren. Befindet sich einer der Schalter in der zweiten Schaltstellung, so überbrückt er das ihm zugeordnete deaktivierte Energiespeichermodul. Befindet sich einer der Schalter in der dritten Schaltstellung, so leistet die Einzelspannung *U_{Einzel}* des ihm zugeordneten Energiespeichermoduls einen negativen Beitragzur Gesamtspannung *U_{Gesamt}.*

Durch sukzessive serielle Verschaltung der n Energiespeichermodule kann die Gesamtspannung *U_{Gesamt}* stufenweise erhöht werden. Die folgende Tabelle zeigt Möglichkeiten, mit Hilfe von vier Energiespeichermodulen mit unterschiedlichen Einzelspannungen *U_{Einzel}* und den dazugehörigen Schaltern 1 bis 4 eine Reihe von Gesamtspannungen *U_{Gesamt}* zu erzeugen. Der Zustand des Überbrückens eines Energiespeichermoduls ist in der Tabelle mit der Ziffer 0 angegeben, ein mit regulärer Polarität aktiviertes Energiespeichermodul mit der Ziffer 1:

| Schalter-Nr. / Einzelspannung | S1 / 50 V | S2 / 40V | S3 / 48V | S4 / 54V | U_{Gesamt} |
|---|---|---|---|---|---|
| | 0 | 0 | 0 | 0 | 0 V |
| | 1 | 0 | 0 | 0 | 50 V |
| | 1 | 1 | 0 | 0 | 90 V |
| | 1 | 0 | 1 | 0 | 98 V |
| | 1 | 0 | 0 | 1 | 104 V |
| | 0 | 1 | 1 | 0 | 88 V |

Anhand von Figur 2 wird die Funktionsweise des von der Erfindung vorgeschlagenen Verfahrens erläutert. Dargestellt ist eine durch überlappende Aktivierung von gemäß Fig. 1 verschalteten Energiespeichermodulen erzeugte näherungsweise sinusförmige Halbwelle. Vereinfachend wird davon ausgegangen, dass jedes der Energiespeichermodule die gleiche Einzelspannung *U_{Einzel}* liefert. Zur Erzeugung der Halbwelle werden 9 Energiespeichermodule B1 bis B9 seriell miteinander verschaltet, wobei
- B1 die Einzelspannung U1 über den Aktivierungszeitraum t1 liefert,
- B2 die Einzelspannung U2 über den Aktivierungszeitraum t2 liefert,
- B3 die Einzelspannung U3 über den Aktivierungszeitraum t3 liefert,
- B4 die Einzelspannung U4 über den Aktivierungszeitraum t4 liefert,
- B5 die Einzelspannung U5 über den Aktivierungszeitraum t5 liefert,
- B6 die Einzelspannung U6 über den Aktivierungszeitraum t6 liefert,
- B7 die Einzelspannung U7 über den Aktivierungszeitraum t7 liefert,
- B8 die Einzelspannung U8 über den Aktivierungszeitraum t8 liefert,
- B9 die Einzelspannung U9 über den Aktivierungszeitraum t9 liefert, und
U1 = U2 = U3 = U4 = U5 = U6 = U7 = U8 = U9 und
t1 > t2 und t2 > t3 und t3 > t4 und t4 > t5 und t5 > t6 und t6 > t7 und t7 > t8 und t8 > t9.

Die Energiespeichermodule B1 bis B9 werden zeitversetzt in der Reihe ihrer Nummerierung aktiviert und in umgekehrter Reihenfolge zeitversetzt deaktiviert. Beim Aktivieren erhöht sich die Gesamtspannung *U_{Gesamt}* stufenweise bis der gewünschte Scheitelwert erreicht ist, danach wird die Gesamtspannung stufenweise abgesenkt. Die Form der Sinuskurve ergibt sich - abgesehen vom Scheitelwert - aus den zeitlichen Abständen, in denen die Energiespeichermodule aktiviert und deaktiviert werden und aus den jeweiligen Aktivierungszeiträumen (die Zeiträume zwischen Aktivierung und Deaktivierung eines Energiespeichermoduls). Um eine gewünschte Sinusform zu erzeugen, wird also festgelegt, in welchen zeitlichen Abständen und über welchen Aktivierungszeitraum die *m* Energiespeichermodule zu aktivieren sind.

Gemäß der vorliegenden Erfindung wird für jedes der 9 Energiespeichermodule ein Leistungswert bestimmt, der charakteristisch für sein Leistungsfähigkeit ist, beispielsweise ein Innenwiderstand, aus dem sich auf den SOH des jeweiligen Energiespeichermoduls rückschließen lässt. Die 9 Energiespeichermodule sind dann nach ihrer Leistungsfähigkeit sortierbar, die festgelegten Aktivierungszeiträume nach ihrer Länge. Die Aktivierungszeiträume werden dann den 9 Energiespeichermodulen zugeordnet. Die Zuordnung erfolgt dabei derart, dass nach der Zuordnung eine Sortierung der Energiespeichermodule nach ihrer Leistungsfähigkeit und nach der Länge der ihnen zugeordneten Aktivierungszeiträume zum gleichen Ergebnis führt. Bei einer Sortierung nach steigender Leistungsfähigkeit ergibt sich also eine Reihenfolge, in der dem leistungsfähigsten Modul der längste Aktivierungszeitraum zugeordnet ist, dem zweitleistungsfähigsten der zweitlängste Aktivierungszeitraum, dem drittleistungsfähigsten der drittlängste Aktivierungszeitraum etc..

Vorliegend bedeutet das, dass das Energiespeichermodul B1 als das mit der höchsten Leistungsfähigkeit identifiziert worden war und daher den längsten Aktivierungszeitraum zugeordnet bekam. B9 wurde als das Energiespeichermodul mit der geringsten Leistungsfähigkeit identifiziert und bekam den kürzesten Aktivierungszeitraum zugeordnet.

Bei der Erzeugung von Spannungskurven gemäß der Erfindung kann bei Übergang zwischen den Spannungsebenen, die durch Zu- oder Abschalten von Energiespeichermodulen erzeugt werden, eine Pulsweitensteuerung verwendet werden, um die Übergänge weicher zu gestalten. dies ist in Figur 4 erläutert, siehe die Pfeile an der linken Seite, die auf die Pulsweitenvorgänge hinweisen.

## Patentansprüche

1. Verfahren zum Betreiben eines modularen Batteriespeichersystems, das eine Gruppe aus *n* wieder aufladbaren Energiespeichermodulen umfasst, wobei
• jedem einzelnen der *n* Energiespeichermodule ein Schalter zugeordnet ist, über den das jeweilige Energiespeichermodul aktiviert und deaktiviert werden kann, und
• die *n* Energiespeichermodule über die Schalter derart miteinander verschaltbar sind, dass sich die Einzelspannungen *U_{Einzel}* aktivierter Energiespeichermodule zu einer Gesamtspannung *U_{Gesamt}* addieren können,
und das Verfahren die folgenden Schritte
a. Es wird für jedes der *n* Energiespeichermodule mindestens ein Leistungswert ermittelt,
b. Es wird eine sich zeitlich ändernde Gesamtspannung *U_{Ges}(t)* erzeugt, indem mindestens zwei Energiespeichermodule aus der Gruppe zeitlich überlappend aber über unterschiedlich lange Aktivierungszeiträume aktiviert werden, und
c. In Abhängigkeit des ermittelten mindestens einen Leistungswerts wird jedem der mindestens zwei Energiespeichermodule einer der unterschiedlich langen Aktivierungszeiträume zugeordnet,
umfasst und **dadurch gekennzeichnet, dass** als Leistungswert ein State-of-Health-Wert, kurz SOH-Wert oder ein zu dem SOH-Wert korrelierender Wert bestimmt wird.

2. Verfahren nach Anspruch 1 mit den folgenden zusätzlichen Schritten:
a. In einem Datenspeicher werden die ermittelten Leistungswerte für jedes der n Energiespeichermodule abgelegt, so dass eine Sortierung der n Energiespeichermodule nach ihrer Leistungsfähigkeit möglich ist.
b. Die Zuordnung der Energiespeichermodule zu den unterschiedlich langen Aktivierungszeiträumen erfolgt anhand der in dem Datenspeicher abgelegten Leistungswerte.
c. Energiespeichermodulen mit vergleichsweise hoher Leistungsfähigkeit werden längere Aktivierungszeiträume zugeordnet als Energiespeichermodulen mit vergleichsweise geringer Leistungsfähigkeit.

3. Verfahren nach Anspruch 1 oder Anspruch 2 mit den folgenden zusätzlichen Schritten:
a. Es wird ermittelt, welche Anzahl *m* an Energiespeichermodulen zur Erzeugung einer Scheitelspannung von *U_{Ges}(t)* benötigt wird.
b. Die m Energiespeichermodule werden aus den zur Verfügung stehenden *n* Energiespeichermodulen ausgewählt.
c. Um einen gewünschten Spannungsverlauf von *U_{Ges}(t)* zu erzeugen, wird festgelegt, in welchen zeitlichen Abständen und über welchen Aktivierungszeitraum die m Energiespeichermodule zu aktivieren sind.
d. Die ausgewählten *m* Energiespeichermodule werden unter Berücksichtigung der Sortierkriterien "Leistungsfähigkeit" und "Länge der ihnen zugeordneten Aktivierungszeiträume" in eine Reihenfolge überführt, in der die beiden Sortierkriterien in gleicher Richtung entweder beide ansteigen oder beide abfallen.
e. Die *m* Energiespeichermodule werden in dieser Reihenfolge und in den festgelegten zeitlichen Abständen aktiviert.

4. Verfahren nach Anspruch 3 mit den folgenden zusätzlichen Merkmalen und/oder Schritten:
a. Der gewünschte Spannungsverlauf ist sinusförmig.
b. Das Energiespeichermodul mit der höchsten Leistungsfähigkeit wird zuerst aktiviert und das mit der geringsten Leistungsfähigkeit zuletzt.
c. Das Energiespeichermodul mit der höchsten Leistungsfähigkeit wird über den längsten Aktivierungszeitraum aktiviert und das Energiespeichermodul mit der geringsten Leistungsfähigkeit über den kürzesten Aktivierungszeitraum.

5. Verfahren nach Anspruch 4 mit einem der folgenden zusätzlichen Merkmale:
a. Die Gruppe aus den *n* Energiespeichermodulen umfasst ausschließlich Energiespeichermodule vom Lithium-Ionen-Typ.
b. Die Gruppe aus den *n* Energiespeichermodulen umfasst ausschließlich Energiespeichermodule vom Typ Nickel-Metallhydrid.
c. Die Gruppe aus den *n* Energiespeichermodulen umfasst verschiedene Typen von Energiespeichermodulen.
d. Die Gruppe aus den *n* Energiespeichermodulen umfasst mindestens ein Energiespeichermodul mit einer Kathode auf Basis von LFP (Lithium-Eisenphosphat).
e. Die Gruppe aus den *n* Energiespeichermodulen umfasst mindestens ein Energiespeichermodul mit einer Kathode auf Basis von NMC (Lithium-Nickel-Mangan-Kobalt-Oxid).
f. Die Gruppe aus den *n* Energiespeichermodulen umfasst mindestens ein Energiespeichermodul mit einer Kathode auf Basis von LTO (Lithium-Titanat).
g. Die Gruppe aus den *n* Energiespeichermodulen umfasst mindestens ein Energiespeichermodul mit einer Kathode auf Basis von NCA (Lithium-Nickel-Kobalt-Aluminium-Oxid).
h. Die Gruppe aus den *n* Energiespeichermodulen umfasst mindestens ein Energiespeichermodul vom Typ Pb /PbO₂.

6. Verfahren nach einem der vorhergehenden Ansprüche mit den folgenden zusätzlichen Merkmalen und/oder zusätzlichen Schritten:
a. Einer der den *n* Energiespeichermodulen zugeordneten Schalter ist dazu ausgebildet, eine Pulswellenmodulation (PWM) erzeugen zu können.
b. Bei dem Energiespeichermodul, dem dieser Schalter zugeordnet ist, handelt es sich um einen Kondensator.
c. Beim Aktivieren und/oder Deaktivieren von Energiespeichermodulen wird mittels des zur PWM-Erzeugung ausgebildeten Schalters eine PWM erzeugt, um den Übergang zwischen einzelnen Spannungsstufen abzufedern.

7. Verfahren nach einem der vorhergehenden Ansprüche mit mindestens einem der folgenden zusätzlichen Merkmale und/oder zusätzlichen Schritte:
a. Es wird für jedes der *n* Energiespeichermodule ein Leistungsschwellwert definiert, bei dessen Unterschreiten ein Energiespeichermodul deaktiviert wird.
b. Bei Unterschreiten des Leistungsschwellwerts wird ein Signal oder eine Mitteilung ausgelöst, das oder die auf die Deaktivierung hinweist.
c. Das deaktivierte Energiespeichermodul wird überbrückt, so dass es nicht mehr mit weiteren Energiespeichermodulen elektrisch verbunden ist, oder ausgetauscht.

8. Batteriemanagementsystem für ein modulares Batteriespeichersystem, das eine Gruppe aus *n* wieder aufladbaren Energiespeichermodulen umfasst, mit den folgenden Merkmalen:
a. Das Batteriemanagementsystem umfasst für jedes einzelne der *n* Energiespeichermodule einen Schalter, über den das jeweilige Energiespeichermodul aktiviert und deaktiviert werden kann,
b. die Schalter sind derart ausgebildet und miteinander verbunden, dass sich die Einzelspannungen *U_{Einzel}* aktivierter Energiespeichermodule zu einer Gesamtspannung *U_{Gesamt}* addieren können,
c. das Batteriemanagementsystem umfasst eine Prüfeinrichtung, mittels der sich für jedes der *n* Energiespeichermodule mindestens ein Leistungswert ermitteln lässt, der charakteristisch für seine Leistungsfähigkeit ist,
d. das Batteriemanagementsystem umfasst eine Steuereinrichtung, mittels der sich mindestens zwei der Energiespeichermodule aus der Gruppe über die jeweils zugeordneten Schalter zeitlich überlappend aber über unterschiedlich lange Aktivierungszeiträume aktivieren lassen, um eine sich zeitlich ändernde Gesamtspannung *U_{Ges}(t)* zu erzeugen, und
e. die Steuereinrichtung ist dazu ausgebildet, jedem der mindestens zwei Energiespeichermodule in Abhängigkeit des ermittelten mindestens einen Leistungswerts einer der unterschiedlich langen Aktivierungszeiträume zuzuordnen, **dadurch gekennzeichnet, dass** die Prüfeinrichtung dazu ausgebildet ist, als Leistungswert einen State-of-Health-Wert, kurz SOH-Wert oder einen mit dem SOH-Wert korrelierenden Wert der Energiespeichermodule zu ermitteln.

9. Batteriemanagementsystem nach Anspruch 8 mit den folgenden zusätzlichen Merkmalen:
a. Es umfasst einen Datenspeicher, in dem die ermittelten Leistungswerte für jedes der *n* Energiespeichermodule abgelegt werden können, so dass eine Sortierung der *n* Energiespeichermodule nach ihrer Leistungsfähigkeit möglich ist.
b. Die Steuereinrichtung ist dazu ausgebildet, die Zuordnung der Energiespeichermodule zu den unterschiedlich langen Aktivierungszeiträumen anhand der in dem Datenspeicher abgelegten Leistungswerte vorzunehmen.

10. Batteriemanagementsystem nach Anspruch 8 oder Anspruch 9 mit den folgenden zusätzlichen Merkmalen:
a. Die Steuereinrichtung ist dazu ausgebildet, automatisiert zu ermitteln, welche Anzahl *m* an Energiespeichermodulen zur Erzeugung einer Scheitelspannung von *U_{Ges}(t)* benötigt wird.
b. Die Steuereinrichtung ist dazu ausgebildet, automatisiert die *m* Energiespeichermodule aus den zurVerfügung stehenden *n* Energiespeichermodulen auszuwählen.
c. Das Batteriemanagementsystem umfasst einen Datenspeicher, in dem abgelegt werden kann, in welchen zeitlichen Abständen und über welchen Aktivierungszeitraum die *m* Energiespeichermodule zu aktivieren sind.
d. Die Steuereinrichtung ist dazu ausgebildet, automatisiert die ausgewählten *m* Energiespeichermodule durch Sortierung nach den Sortierkriterien "Leistungsfähigkeit" und "Länge der ihnen zugeordneten Aktivierungszeiträume" in eine Reihenfolge zu überführen, in der die beiden Sortierkriterien in gleicher Richtung entweder beide ansteigen oder beide abfallen.
e. Die Steuereinrichtung ist dazu ausgebildet, die *m* Energiespeichermodule in dieser Reihenfolge und in den festgelegten zeitlichen Abständen zu aktivieren.

11. Batteriemanagementsystem nach einem der Ansprüche 8 bis 10 mit den folgenden zusätzlichen Merkmalen:
a. Einer der den *n* Energiespeichermodulen zugeordneten Schalter ist dazu ausgebildet, eine Pulswellenmodulation (PWM) erzeugen zu können.
b. Bei dem Energiespeichermodul, dem dieser Schalter zugeordnet ist, handelt es sich um einen Kondensator.
c. Die Steuereinrichtung ist dazu ausgebildet, beim Aktivieren und/oder Deaktivieren von Energiespeichermodulen mittels des zur PWM-Erzeugung ausgebildeten Schalters eine PWM zu erzeugen, um den Übergang zwischen einzelnen Spannungsstufen abzufedern.

12. Modulares Batteriespeichersystem, das eine Gruppe aus *n* wieder aufladbaren Energiespeichermodulen umfasst, mit mindestens einem derfolgenden Merkmale:
a. Das Batteriespeichersystem umfasst ein Batteriemanagementsystem nach einem der Ansprüche 8 bis 11.
b. Das Batteriespeichersystem ist dazu ausgebildet, gemäß einem Verfahren nach einem der Ansprüche 1 bis 7 betrieben zu werden.

13. Batteriespeichersystem nach Anspruch 12 mit einem der folgenden zusätzlichen Merkmale:
a. Die Gruppe aus den *n* Energiespeichermodulen umfasst ausschließlich Energiespeichermodule vom Lithium-Ionen-Typ.
b. Die Gruppe aus den *n* Energiespeichermodulen umfasst ausschließlich Energiespeichermodule vom Typ Nickel-Metallhydrid.
c. Die Gruppe aus den *n* Energiespeichermodulen umfasst verschiedene Typen von Energiespeichermodulen.
d. Die Gruppe aus den *n* Energiespeichermodulen umfasst mindestens ein Energiespeichermodul mit einer Kathode auf Basis von LFP (Lithium-Eisenphosphat).
e. Die Gruppe aus den *n* Energiespeichermodulen umfasst mindestens ein Energiespeichermodul mit einer Kathode auf Basis von NMC (Lithium-Nickel-Mangan-Kobalt-Oxid).
f. Die Gruppe aus den *n* Energiespeichermodulen umfasst mindestens ein Energiespeichermodul mit einer Kathode auf Basis von LTO (Lithium-Titanat).
g. Die Gruppe aus den *n* Energiespeichermodulen umfasst mindestens ein Energiespeichermodul mit einer Kathode auf Basis von NCO (Lithium-Nickel-Kobalt-Aluminium-Oxid).
h. Die Gruppe aus den *n* Energiespeichermodulen umfasst mindestens ein Energiespeichermodul vom Typ Pb /PbO₂.

## Claims

1. Method for operating a modular battery storage system, which comprises a group of *n* rechargeable energy storage modules, wherein
• a switch is assigned to each individual one of the *n* energy storage modules, the respective energy storage module being able to be activated and deactivated by means of said switch, and
• the *n* energy storage modules can be interconnected with one another by means of the switches in such a way that the individual voltages *U_{individual}* of activated energy storage modules can be added to form a total voltage *Uₜₒₜₐₗ,*
and the method comprises the following steps
a. at least one power value is identified for each of the n energy storage modules,
b. a temporally variable total voltage *Uₜₒₜ(t)* is generated by virtue of at least two energy storage modules from the group being activated with a time overlap but over activation periods of different length, and
c. one of the activation periods of different length is assigned to each of the at least two energy storage modules depending on the identified at least one power value,
and **characterized in that** a state of health value, SOH value for short, or a value correlating to the SOH value is determined as power value.

2. Method according to Claim 1 having the following additional steps:
a. the identified power values for each of the n energy storage modules are stored in a data memory so that it is possible to sort the n energy storage modules according to their power capacity.
b. the energy storage modules are assigned to the activation periods of different length on the basis of the power values stored in the data memory.
c. energy storage modules with a comparatively high power capacity are assigned longer activation periods than energy storage modules with a comparatively low power capacity.

3. Method according to Claim 1 or Claim 2 having the following additional steps:
a. the number *m* of energy storage modules required to generate a peak voltage of *Uₜₒₜ(t)* is identified.
b. the m energy storage modules are selected from the available *n* energy storage modules.
c. to generate a desired voltage profile of *Uₜₒₜ(t),* the time intervals in which and the activation period over which the m energy storage modules are to be activated is determined.
d. taking into account the sorting criteria "power capacity" and "length of the activation periods assigned thereto", the selected *m* energy storage modules are put into an order in which the two sorting criteria either both increase or both decrease in the same direction.
e. the *m* energy storage modules are activated in this order and at the determined time intervals.

4. Method according to Claim 3 having the following additional features and/or steps:
a. the desired voltage profile is sinusoidal.
b. the energy storage module with the highest power capacity is activated first and the one with the lowest power capacity is activated last.
c. the energy storage module with the highest power capacity is activated over the longest activation period and the energy storage module with the lowest power capacity is activated over the shortest activation period.

5. Method according to Claim 4 having one of the following additional features:
a. the group of *n* energy storage modules comprises exclusively energy storage modules of the lithium ion type.
b. the group of *n* energy storage modules comprises exclusively energy storage modules of the nickel metal hydride type.
c. the group of *n* energy storage modules comprises different types of energy storage module.
d. the group of *n* energy storage modules comprises at least one energy storage module having a cathode based on LFP (lithium iron phosphate).
e. the group of *n* energy storage modules comprises at least one energy storage module having a cathode based on NMC (lithium nickel manganese cobalt oxide).
f. the group of *n* energy storage modules comprises at least one energy storage module having a cathode based on LTO (lithium titanate).
g. the group of *n* energy storage modules comprises at least one energy storage module having a cathode based on NCA (lithium nickel cobalt aluminium oxide).
h. the group of *n* energy storage modules comprises at least one energy storage module of the Pb/PbO₂ type.

6. Method according to one of the preceding claims having the following additional features and/or additional steps:
a. one of the switches assigned to the *n* energy storage modules is designed to be able to generate a pulse width modulation (PWM).
b. the energy storage module to which said switch is assigned is a capacitor.
c. during activation and/or deactivation of energy storage modules, a PWM is generated by means of the switch designed for PWM generation in order to ease the transition between individual voltage levels.

7. Method according to one of the preceding claims having at least one of the following additional features and/or additional steps:
a. a power threshold value is defined for each of the *n* energy storage modules, an energy storage module being deactivated when said power threshold value is undershot.
b. a signal or a message suggesting the deactivation is triggered when the power threshold value is undershot.
c. the deactivated energy storage module is bridged, so that it is no longer electrically connected to further energy storage modules, or is exchanged.

8. Battery management system for a modular battery storage system, which comprises a group of n rechargeable energy storage modules, comprising the following features:
a. the battery management system comprises a switch for each of the individual *n* energy storage modules, the respective energy storage module being able to be activated and deactivated by means of said switch,
b. the switches are designed and connected to one another in such a way that the individual voltages *U_{individual}* of activated energy storage modules can be added to form a total voltage *Uₜₒₜₐₗ*,
c. the battery management system comprises a test device by means of which at least one power value can be identified for each of the *n* energy storage modules, said power value being characteristic of the power capacity of said energy storage module,
d. the battery management system comprises a control device by means of which at least two of the energy storage modules from the group can be activated with a time overlap but over activation periods of different length by means of the respectively associated switches in order to generate a temporally variable total voltage *Uₜₒₜ(t),* and
e. the control device is designed to assign one of the activation periods of different length to each of the at least two energy storage modules depending on the identified at least one power value,
**characterized in that** the test device is designed to identify a state of health value, SOH value for short, or a value of the energy storage modules correlating to the SOH value as power value.

9. Battery management system according to Claim 8 comprising the following additional features:
a. it comprises a data memory in which the identified power values for each of the *n* energy storage modules can be stored, so that it is possible to sort the *n* energy storage modules according to their power capacity.
b. the control device is designed to perform the assignment of the energy storage modules to the activation periods of different length on the basis of the power values stored in the data memory.

10. Battery management system according to Claim 8 or Claim 9 comprising the following additional features:
a. the control device is designed to identify the number *m* of energy storage modules required to generate a peak voltage of *Uₜₒₜ(t)* in an automated manner.
b. the control device is designed to select the *m* energy storage modules from the available *n* energy storage modules in an automated manner.
c. the battery management system comprises a data memory in which it is possible to store the time intervals in which and the activation period over which the *m* energy storage modules are to be activated.
d. the control device is designed, taking into account the sorting criteria "power capacity" and "length of the activation periods assigned thereto", to put the selected *m* energy storage modules into an order in which the two sorting criteria either both increase or both decrease in the same direction by sorting, in an automated manner.
e. the control device is designed to activate the *m* energy storage modules in this order and at the defined time intervals.

11. Battery management system according to one of Claims 8 to 10 comprising the following additional features:
a. one of the switches assigned to the *n* energy storage modules is designed to be able to generate a pulse width modulation (PWM).
b. the energy storage module to which said switch is assigned is a capacitor.
c. the control device is designed, during activation and/or deactivation of energy storage modules, to generate a PWM by means of the switch designed for generating PWM in order to ease the transition between individual voltage levels.

12. Modular battery storage system, which comprises a group of *n* rechargeable energy storage modules comprising at least one of the following features:
a. the battery storage system comprises a battery management system according to one of Claims 8 to 11.
b. the battery storage system is designed to be operated in accordance with a method according to one of Claims 1 to 7.

13. Battery storage system according to Claim 12 having one of the following additional features:
a. the group of *n* energy storage modules comprises exclusively energy storage modules of the lithium ion type.
b. the group of *n* energy storage modules comprises exclusively energy storage modules of the nickel metal hydride type.
c. the group of *n* energy storage modules comprises different types of energy storage module.
d. the group of *n* energy storage modules comprises at least one energy storage module having a cathode based on LFP (lithium iron phosphate).
e. the group of *n* energy storage modules comprises at least one energy storage module having a cathode based on NMC (lithium nickel manganese cobalt oxide).
f. the group of *n* energy storage modules comprises at least one energy storage module having a cathode based on LTO (lithium titanate).
g. the group of *n* energy storage modules comprises at least one energy storage module having a cathode based on NCO (lithium nickel cobalt aluminium oxide).
h. the group of *n* energy storage modules comprises at least one energy storage module of the Pb/PbO₂ type.

## Revendications

1. Procédé de fonctionnement d'un système de stockage de batterie modulaire, lequel comprend un groupe de *n* modules de stockage d'énergie rechargeables,
- un commutateur étant associé à chacun des *n* modules de stockage d'énergie, par le biais duquel le module de stockage d'énergie peut être activé et désactivé, et
- les *n* modules de stockage d'énergie pouvant être interconnectés par le biais des commutateurs de telle sorte que les tensions individuelles *U_{Einzel}* des modules de stockage d'énergie activés peuvent s'additionner pour donner une tension totale *U_{Gesamt},*
et le procédé comprenant les étapes suivantes
a. au moins une valeur de puissance est déterminée pour chacun des *n* modules de stockage d'énergie,
b. une tension totale variant dans le temps *U_{Ges}(t)* est générée, au moins deux modules de stockage d'énergie du groupe étant activés sur des périodes d'activation de longueurs différentes mais se chevauchant dans le temps, et
c. en fonction de l'au moins une valeur de puissance déterminée, une des périodes d'activation de longueurs différentes est associée à chacun des au moins deux modules de stockage d'énergie,
et **caractérisé en ce qu'**une valeur d'état de santé (valeur SOH) ou une valeur corrélée à la valeur SOH est évaluée.

2. Procédé selon la revendication 1 avec les étapes supplémentaires suivantes :
a. les valeurs de puissance déterminées pour chacun des *n* modules de stockage d'énergie sont enregistrées dans une mémoire, de sorte qu'il est possible de trier les *n* modules de stockage d'énergie selon leurs performances.
b. l'association des modules de stockage d'énergie aux périodes d'activation de longueurs différentes s'effectue à l'aide des valeurs de puissance enregistrées dans la mémoire.
c. des périodes d'activation plus longues sont associées à des modules de stockage d'énergie dont les performances sont comparativement supérieures plutôt qu'à des modules de stockage d'énergie dont les performances sont comparativement inférieures.

3. Procédé selon la revendication 1 ou la revendication 2 avec les étapes supplémentaires suivantes :
a. on détermine quel nombre *m* de modules de stockage d'énergie est nécessaire pour générer une tension de crête *U_{Ges}(t)*.
b. les *m* modules de stockage d'énergie sont sélectionnés parmi les *n* modules de stockage d'énergie disponibles.
c. afin de générer une courbe de tension *U_{Ges}(t)* souhaitée, il est déterminé à quels intervalles de temps et sur quelles périodes d'activation les *m* modules de stockage d'énergie doivent être activés.
d. les *m* modules de stockage d'énergie sélectionnés sont passés dans un ordre en prenant en compte les critères de tri « performances » et « longueurs des périodes d'activation associées », les deux critères de tri augmentent tous les deux ou bien diminuent tous les deux dans la même direction.
e. les *m* modules de stockage d'énergie sont activés dans cet ordre et dans les intervalles de temps fixés.

4. Procédé selon la revendication 3 avec les caractéristiques et/ou étapes supplémentaires suivantes :
a. la courbe de tension souhaitée est sinusoïdale.
b. le module de stockage d'énergie avec les performances les plus élevées est activé en premier et celui avec les performances les moins élevées est activé en dernier.
c. le module de stockage d'énergie avec les performances les plus élevées est activé sur la période d'activation la plus longue et le module de stockage d'énergie avec les performances les moins élevées est activé sur la période d'activation la plus courte.

5. Procédé selon la revendication 4 avec une des caractéristiques supplémentaires suivantes :
a. le groupe des *n* modules de stockage d'énergie comprend exclusivement des modules de stockage d'énergie de type lithium-ion.
b. le groupe des *n* modules de stockage d'énergie comprend exclusivement des modules de stockage d'énergie de type nickel-hydrure métallique.
c. le groupe des *n* modules de stockage d'énergie comprend différents types de modules de stockage d'énergie.
d. le groupe des *n* modules de stockage d'énergie comprend au moins un module de stockage d'énergie doté d'une cathode à base LFP (phosphate de fer lithié).
e. le groupe des *n* modules de stockage d'énergie comprend au moins un module de stockage d'énergie doté d'une cathode à base NMC (lithium-nickel- manganèse-oxyde de cobalt).
f. le groupe des *n* modules de stockage d'énergie comprend au moins un module de stockage d'énergie doté d'une cathode à base LTO (titanate de lithium).
g. le groupe des *n* modules de stockage d'énergie comprend au moins un module de stockage d'énergie doté d'une cathode à base NCA (lithium-nickel- cobalt-oxyde d'aluminium).
h. le groupe des *n* modules de stockage d'énergie comprend au moins un module de stockage d'énergie de type Pb/PbO₂.

6. Procédé selon l'une des revendications précédentes avec les caractéristiques et/ou étapes supplémentaires suivantes :
a. un des commutateurs associés aux *n* modules de stockage d'énergie est réalisé de façon à pouvoir générer une modulation d'onde pulsée (PWM).
b. on entend, par module de stockage d'énergie auquel ce commutateur est associé, un condensateur.
c. lors de l'activation et/ou de la désactivation de modules de stockage d'énergie, une modulation d'onde pulsée est produite au moyen du commutateur réalisé pour produire une modulation d'onde pulsée, afin d'amortir la transition entre des niveaux de tension individuels.

7. Procédé selon l'une des revendications précédentes avec au moins une des caractéristiques supplémentaires et/ou étapes supplémentaires suivantes :
a. pour chacun des *n* modules de stockage d'énergie, une valeur seuil de puissance est définie, un module de stockage d'énergie étant désactivé lors du sous-dépassement de celle-ci.
b. lors du sous-dépassement de la valeur seuil de puissance, un signal ou un message est émis pour indiquer la désactivation.
c. le module de stockage d'énergie est ponté de façon à ne plus être relié électriquement aux autres modules de stockage d'énergie, ou remplacé.

8. Système de gestion de batterie pour un système de stockage de batterie modulaire, lequel comprend un groupe de *n* modules de stockage d'énergie rechargeables, avec les caractéristiques suivantes :
a. le système de gestion de batterie comprend pour chacun des *n* modules de stockage d'énergie un commutateur, par le biais duquel le module de stockage d'énergie respectif peut être activé et désactivé,
b. les commutateurs sont réalisés et reliés l'un à l'autre de telle sorte que les tensions individuelles *U_{Einzel}* des modules de stockage d'énergie activés peuvent s'additionner pour donner une tension totale *U_{Gesamt},*
c. le système de gestion de batterie comprend un dispositif de contrôle, au moyen duquel pour chacun des *n* modules de stockage d'énergie au moins une valeur de puissance peut être déterminée, laquelle est caractéristique de ses performances,
d. le système de gestion de batterie comprend un dispositif de commande, au moyen duquel au moins deux des modules de stockage d'énergie du groupe peuvent être activés sur des périodes d'activation de longueurs différentes mais se chevauchant dans le temps par le biais des commutateurs respectivement associés, afin de générer une tension totale variant dans le temps *U_{Ges}(t),* et
e. le dispositif de commande est réalisé de façon à associer une des périodes d'activation de longueurs différentes à chacun des au moins deux modules de stockage d'énergie en fonction de l'au moins une valeur de puissance déterminée,
**caractérisé en ce que** le dispositif de contrôle est réalisé de façon à déterminer une valeur d'état de santé (valeur SOH) ou une valeur corrélée à la valeur SOH du module de stockage d'énergie comme valeur de puissance.

9. Système de gestion de batterie selon la revendication 8 avec les caractéristiques supplémentaires suivantes :
a. il comprend une mémoire où les valeurs de puissance déterminées pour chacun des *n* modules de stockage d'énergie peuvent être enregistrées, de sorte qu'il est possible de trier les n modules de stockage d'énergie selon leurs performances.
b. le dispositif de commande est réalisé de façon à effectuer l'association des modules de stockage d'énergie aux périodes d'activation de longueurs différentes à l'aide des valeurs de puissance enregistrées dans la mémoire.

10. Système de gestion de batterie selon la revendication 8 ou la revendication 9 avec les caractéristiques supplémentaires suivantes :
a. le dispositif de commande est réalisé de façon à déterminer automatiquement quel nombre m de modules de stockage d'énergie est nécessaire pour générer une tension de crête *U_{Ges}(t).*
b. le dispositif de commande est réalisé de façon à sélectionner automatiquement les *m* modules de stockage d'énergie parmi les *n* modules de stockage d'énergie disponibles.
c. le système de gestion de batterie comprend une mémoire, où il est possible d'enregistrer à quels intervalles de temps et sur quelles périodes d'activation les *m* modules de stockage d'énergie doivent être activés.
d. le dispositif de commande est réalisé de façon à passer automatiquement les *m* modules de stockage d'énergie sélectionnés dans un ordre par un tri selon les critères de tri « performances » et « longueurs des périodes d'activation associées », où les deux critères de tri ou bien augmentent tous les deux diminuent tous les deux dans la même direction.
e. le dispositif de commande est réalisé de façon à activer automatiquement les *m* modules de stockage d'énergie dans cet ordre et dans les intervalles de temps fixés.

11. Système de gestion de batterie selon l'une des revendications 8 à 10 avec les caractéristiques supplémentaires suivantes :
a. un des commutateurs associés aux *n* modules de stockage d'énergie est réalisé de façon à pouvoir générer une modulation d'onde pulsée (PWM).
b. on entend, par module de stockage d'énergie auquel ce commutateur est associé, un condensateur.
c. le dispositif de commande est réalisé de façon à produire une modulation d'onde pulsée au moyen du commutateur réalisé pour produire une modulation d'onde pulsée lors de l'activation et/ou de la désactivation de modules de stockage d'énergie, afin d'amortir la transition entre des niveaux de tension individuels.

12. Système de stockage de batterie modulaire, lequel comprend un groupe de *n* modules de stockage d'énergie rechargeables, avec au moins une des caractéristiques suivantes :
a. le système de stockage de batterie comprend un système de gestion de batterie selon l'une des revendications 8 à 11.
b. le système de stockage de batterie est réalisé pour fonctionner selon un procédé selon l'une des revendications 1 à 7.

13. Système de stockage de batterie selon la revendication 12 avec une des caractéristiques supplémentaires suivantes :
a. le groupe des *n* modules de stockage d'énergie comprend exclusivement des modules de stockage d'énergie de type lithium-ion.
b. le groupe des *n* modules de stockage d'énergie comprend exclusivement des modules de stockage d'énergie de type nickel-hydrure métallique.
c. le groupe des *n* modules de stockage d'énergie comprend différents types de modules de stockage d'énergie.
d. le groupe des *n* modules de stockage d'énergie comprend au moins un module de stockage d'énergie doté d'une cathode à base LFP (phosphate de fer lithié).
e. le groupe des *n* modules de stockage d'énergie comprend au moins un module de stockage d'énergie doté d'une cathode à base NMC (lithium-nickel- manganèse-oxyde de cobalt).
f. le groupe des *n* modules de stockage d'énergie comprend au moins un module de stockage d'énergie doté d'une cathode à base LTO (titanate de lithium).
g. le groupe des *n* modules de stockage d'énergie comprend au moins un module de stockage d'énergie doté d'une cathode à base NCO (lithium-nickel- cobalt-oxyde d'aluminium).
h. le groupe des *n* modules de stockage d'énergie comprend au moins un module de stockage d'énergie de type Pb/PbO₂.
